# EUROPEAN PATENT APPLICATION

(11) **EP 2 626 928 A1**
(43) Date of publication of application: **14.08.2013**
(21) Application number: 13153968.6
(22) Date of filing: 05.02.2013
(51) Int. Cl.: H01M 2/10

(54) **Battery case**

(30) Priority: 09.02.2012 GB 201202239
(71) Applicant: AIRBUS OPERATIONS LIMITED, Filton Bristol Bristol BS99 7AR (GB)
(72) Inventor: Wagstaff, Lee, CHESTER, Cheshire CH4 ODR (GB); Bradbury, Philip Lee, CHESTER, Cheshire CH4 ODR (GB); Towlson, Gareth, CHESTER, Cheshire CH4 ODR (GB)
(74) Representative: Scott, Alistair Francis

(57) **Abstract**

A battery case for a power tool, comprising a body defining a cavity configured to receive a battery, a body surface of the battery case being formed to have a curved outward profile.

## Description

### FIELD OF THE INVENTION

The invention relates to a tooling accessory, and more particularly to a releasable battery case for enforcing proper set down practice of a power tool.

### BACKGROUND OF THE INVENTION

Cordless portable power tools feature battery packs that are commonly attached to the tool at a distal end, for example at the tool handle. Power tool batteries typically feature a flat base surface that provides a convenient and stable surface for the operator to set the power tool down on when not in use. For most tools the stability of the power tool when set down in this manner is acceptable owing to it being set down on the battery with the flat bottom-most surface of the battery in contact with the ground

Power tool battery packs also commonly feature rigid plastic or metal casings. In certain environments, such as composite structure manufacture, there is potential for the structure to become damaged when power tools are improperly set down on composite components. Composite components typically exhibit poor damage tolerance to low energy impacts. One example of such a component would be a composite wing panel.

### SUMMARY OF THE INVENTION

According to a first aspect of the invention there is provided a battery case for a power tool, comprising a body defining a cavity, configured to receive a battery, the cavity including a bottom wall, complying substantially to the bottom-most surface of the battery, and at least two sidewalls that enclose the battery, and wherein the bottom surface of the battery case has a substantially curved outward profile.

Preferably, the sidewalls substantially enclose the battery on four sides.

The presence of a substantially curved outward profile on the bottom surface of the battery case is advantageous in that it forces the operator of the power tool to set the power tool down on its most elongate portion in order to prevent it from falling over. Preferably the bottom surface is curved in two substantially perpendicular directions. Preferably the bottom surface is domed.

In one embodiment, the invention provides a battery case, wherein the body comprises of being formed from a flexible, resilient material and may be held in place by resilient deformation of the case against the battery sidewalls. For example, the battery case may be stretched over the battery during assembly and may positively engage the battery through elastic deformation.

In another embodiment, the invention provides a battery case, wherein the body is formed from a flexible, resilient material with at least one sidewall comprising a lip portion that resiliently engages a surface of the battery.

The lip portion may extend along the entire length of the sidewall edge. Alternatively, the lip portion may comprise individual tabs that resiliently engage a surface of the battery.

The lip portion may extend from all sidewalls of the battery case.For example, the lip portion may extend from all sidewalls of the battery case and form a continuous lip portion that resiliently engages a surface of the battery.The lip portion may extend from a sidewall to engage the top surface of the battery.

In one embodiment, the invention provides a battery case body formed from a flexible, resilient material and the body further comprises an external recess that is positioned proximate to the cavity opening and arranged to receive fastener. The fastener may be a releasable fastener or may be a locking fastener. For example, the fastener may be a tape with a locking mechanism.

The battery case body may be formed of silicon rubber. The silicon rubber may have a Shore A hardness value between 50 and 60. Such a Shore A hardness may be easily fitted to a battery and also remain in position through resilient deformation.

Alternatively, the body may be formed of a thermoplastic elastomer, for example thermoplastic polyurethane. The thermoplastic polyurethane may have a Shore A hardness value of between 50 to 60. Such a Shore A hardness may provide the battery case with sufficient flexibility to be fitted to a battery and also remain in position through resilient deformation.

In another embodiment, the invention may provide a battery case wherein the body of the case is formed from a substantially rigid material, for example a rigid plastic material such as polycarbonate or polypropylene. The battery case body being may be releasable from the body of the battery and may comprise one or more 'snap-fit' elements, for example cantilever type 'snap-fit' elements, protruding from one or more sidewalls and configured to engage with complimentary recesses on the external surface of the battery.

In some embodiments, the bottom surface of the battery case comprises a plurality of recesses generally aligned with the major dimension axis of that surface's cross section. The plurality of recesses may be generally aligned with the major dimension axis of that surface's cross section. Preferably the bottom surface of the battery case further comprises one or more supporting spines that transit the recesses perpendicularly.

The external surfaces of the sidewalls preferably comprise a plurality of recesses. The recesses may extend from the area proximate to the bottom surface of the battery case to an area proximate to the opening.

In a particular embodiment, external surfaces of the sidewalls comprise a plurality of recesses extending from an area proximate to the opening to an area where the recesses merge coincidentally with a plurality of recesses on the bottom surface of the battery case, the recesses on the bottom surface being generally aligned with the major dimension axis of that surface's cross section and further comprising one or more supporting spines that transit the recesses perpendicularly.

### DESCRIPTION OF THE DRAWINGS

Embodiments of the present invention will now be described by way of example only with reference to the accompanying schematic drawings of which:
Figure 1 illustrates a side view of a battery powered tool assembly;
Figure 2 illustrates a side view of a battery powered tool assembly with a battery case disposed on the battery according to an embodiment of the invention;
Figure 3 illustrates a side view close up of the battery and battery case arrangement of Figure 2 according to an embodiment of the invention;
Figure 4 illustrates a cross section taken through line A-A in Figure 3;
Figure 5a and 5b illustrate a side view and plan view of a battery and battery case according to another embodiment of the invention;
Figure 6 illustrates a cross section taken through a line B-B in figure 5b;
Figure 7a illustrates a side view of a battery and battery case according to yet another embodiment of the invention.
Figure 7b illustrates an enlarged view of the snap fit element of figure 7a;
Figure 8 illustrates an end view of the battery case and battery of the embodiment shown in Figure 5;
Figure 9 illustrates a bottom up view of the battery case and battery of the embodiment shown in Figure 5; and

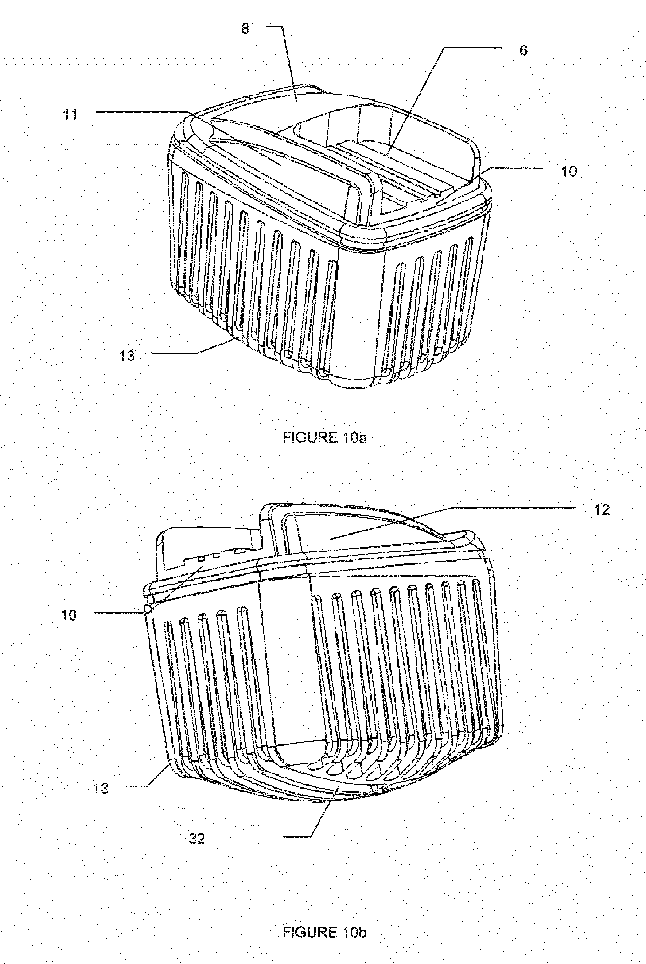

Figure 10a and 10b illustrate two isometric views of the battery case and battery of the embodiment shown in Figure 5.

### TECHNICAL DESCRIPTION

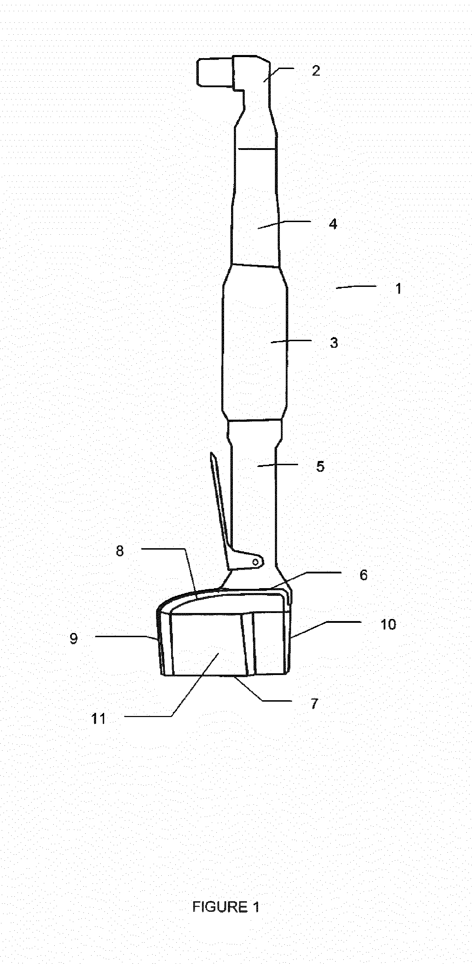

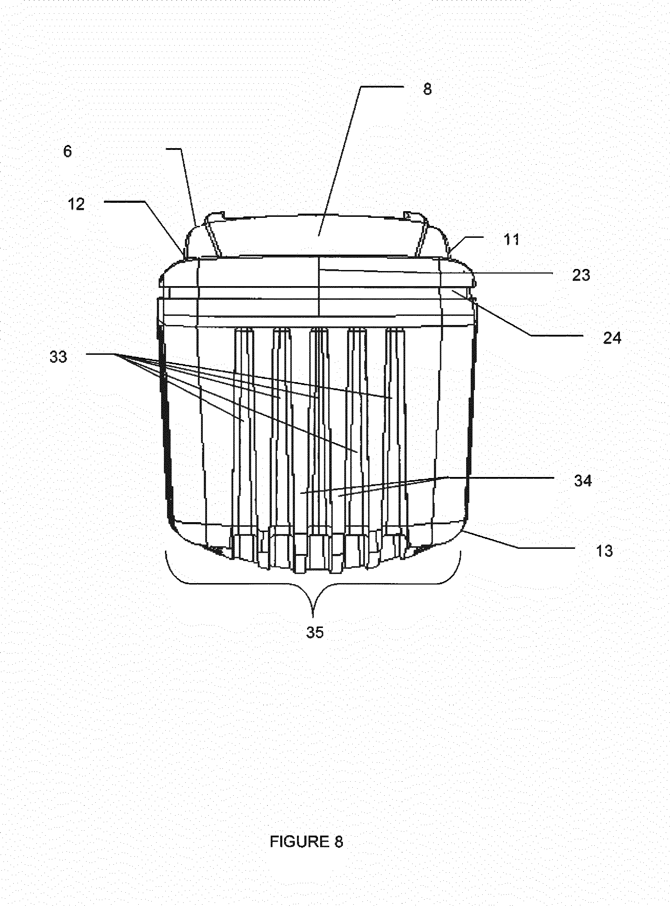

Figure 1 shows a known battery powered tool 1. The power tool body comprises a tool head portion 2, a motor portion 3, a joining portion 4, a handle 5 and a battery 6. The battery 6 is mechanically releasable from the handle housing. The battery has a bottom surface 7, a top surface 8 and four sidewalls, 9, 10, 11 and 12 (shown Figure 8).

When not in use by an operator, power tools such as the one shown in Figure 1 are capable of being set down on the bottom surface 7 of the battery.

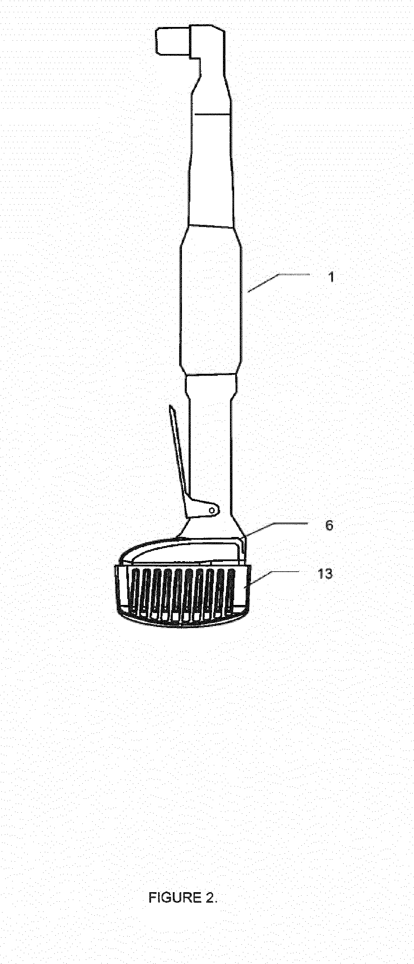

As shown in Figure 2, embodiments of the invention provide a battery case 13 which may be attached to a standard battery 6 of a power tool 1. The battery case 13 comprises a cavity arranged to receive the power tool battery 6 and is formed of a resilient, flexible material.

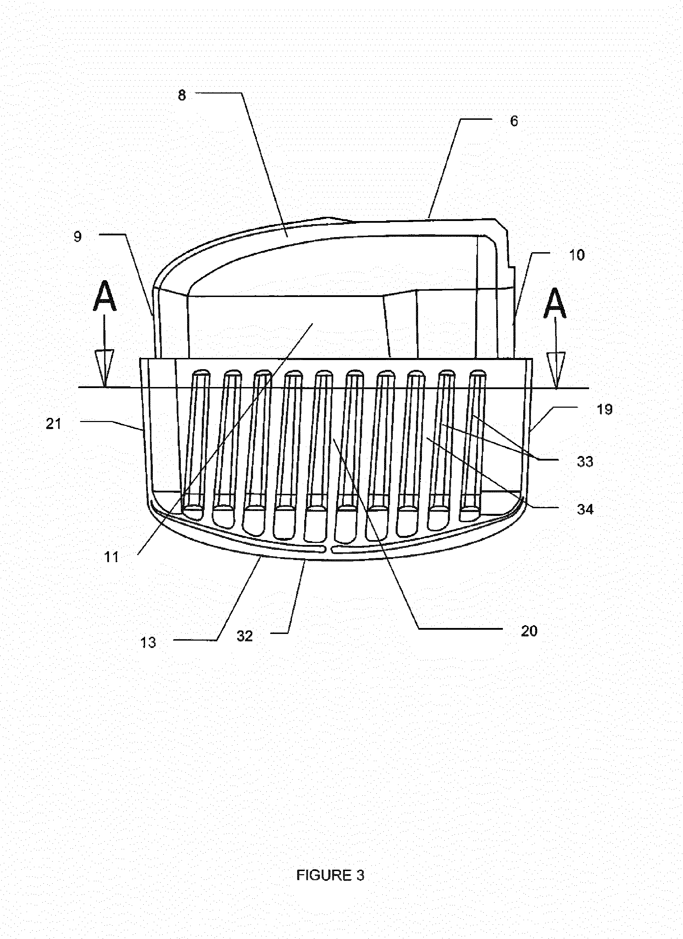

Figure 3 illustrates the battery case disposed on the power tool battery. The battery case encloses the battery's bottom-most surface 7 and a substantial portion of the battery sidewall surfaces 9, 10, 11 and 12.

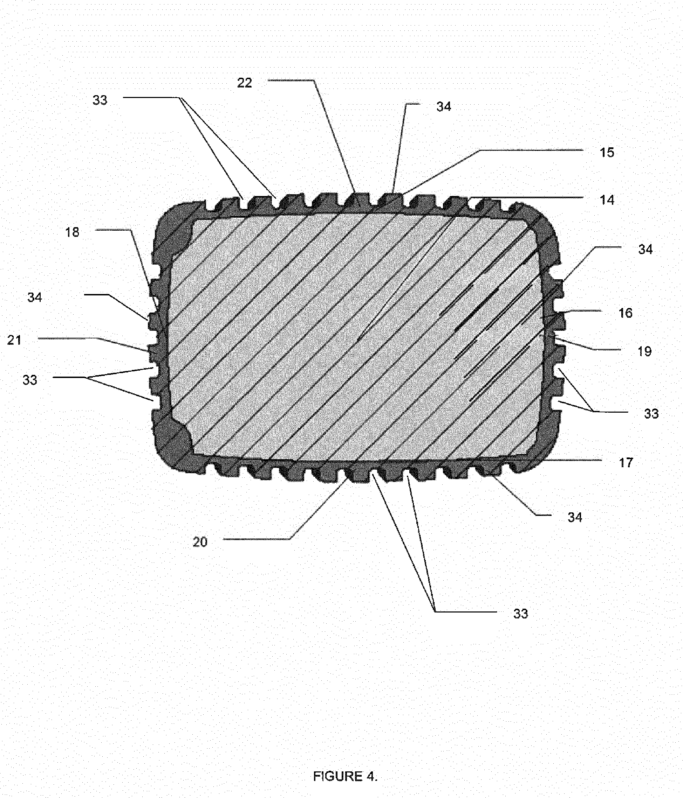

As illustrated in Figure 4, the battery case internal bottom surface 14 and internal sidewall surfaces 15, 16, 17, 18 are formed so as to comply with the external surfaces of the battery and the sidewalls 19, 20, 21, 22 are formed so as to deform resiliently against the external sidewall surfaces 9, 10, 11 and 12 (not shown) of the battery.

The body of the battery case described in this embodiment may be formed from silicon rubber and have cavity dimensions such that once fitted, the resilient deformation of the sidewalls 19, 20, 21, 22 is sufficient to retain the battery case in position with respect to the battery during normal operation and use of the power tool.

The bottom surface of the battery case 35 is curved in two directions so as to present a substantially outward domed bottommost surface.

It is the object of all embodiments of the invention that when the battery case 13 is attached to the power tool battery 6, it would be difficult for the operator to set the tool down on the bottom surface of the battery case 13. Therefore, with the battery case 13 attached to the power tool battery 6, the operator will have to set the tool down on one of its more elongate edges thus reducing the likelihood of the tool being knocked over or falling over and causing damage to the surface that it has been set down on.

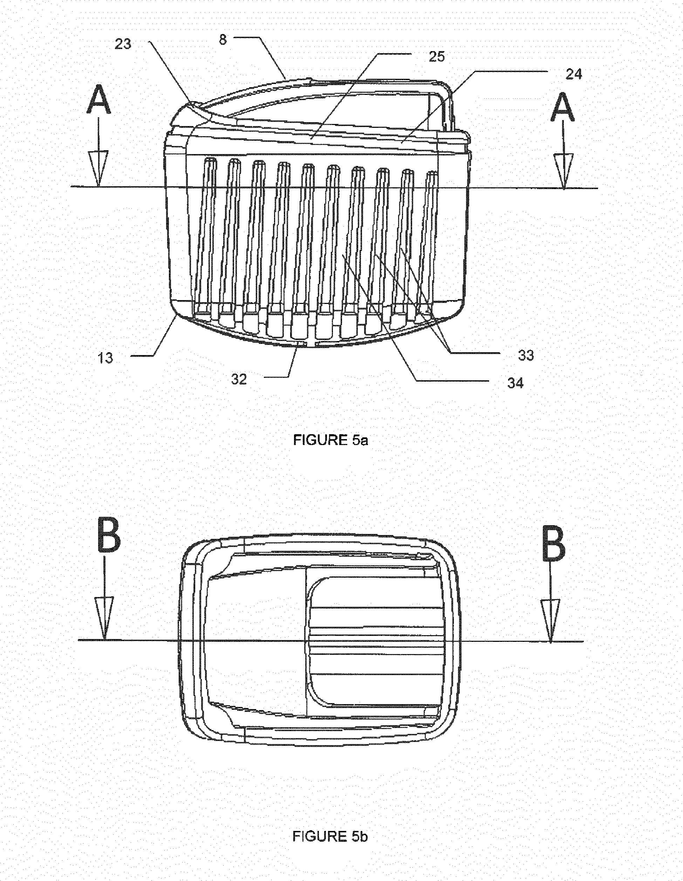

Figure 5 shows an alternative embodiment of the invention is shown. The body of the battery case is again formed from a resilient, flexible material. Rather than being held in contact with the battery solely by resilient deformation of a substantial portion of the sidewalls 19, 20, 21, 22 as previously described, the battery is held in place by resilient deformation of a lip portion 23 that extends from a sidewall 21 of the battery case body.

It should be appreciated that one of more of the sidewalls 19, 20, 21, 22 can feature a lip portion to hold the battery case 13 in place by resilient deformation. The overlapping nature of the lip portion 23 is more clearly illustrated in a cross section view of the embodiment shown in Figure 5.

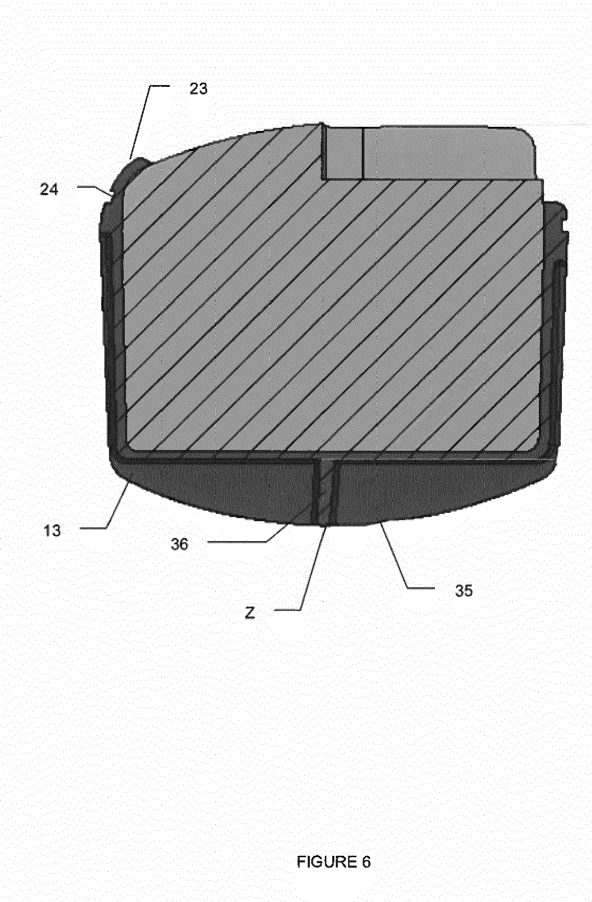

Also shown is in Figure 5 and 6 is an external surface recess 24 that is positioned proximate to the cavity opening. The recess 24 is configured to receive a tape with a locking mechanism 25 (not shown) such as a tie wrap or cable tie. Once the battery case 13 is fully disposed on the battery 6, the tape with a locking mechanism 25 is received in the recess 24 and tightened so that the tape with the locking mechanism compresses the portion of sidewall 19, 20, 21, 22 beneath it sufficiently so as to secure battery case 13 to the battery 6. The purpose of this additional means of securing the battery case 13 to the battery 6 in conjunction with the use of a lip portion 23 is primarily to prevent deliberate removal although it should be appreciated that both of the aforementioned features can be used separately i.e. the battery case 13 can be formed using either the lip portion 23 feature or using a recess 24 combined with a tape lock mechanism 25 in order to keep the battery case disposed on the battery during normal operation and use. Also, the body of the battery case described in the previously mentioned embodiment preferably can be formed from Thermoplastic Elastomers (TPE) material. This material is preferable because certain classes, such as polyester based thermoplastic polyurethane (TPU), offer suitable material mechanical properties such as elasticity and resilience coupled with abrasion resistance tear and cut resistance and impact resistance. This is necessary as the battery case 13 needs to resiliently deform around the battery 6 to hold it in place and yet be sufficiently tough to prevent damage from abrasions and tears when in use. This type of material also provides good oil and grease resistance. A Shore A hardness value between 50 and 60 can be selected to provide these properties. The use of TPE also has further advantages, such as it is relatively easy in manufacture by injection moulding, which in turn offers rapid and economical manufacture of the finished article. Also, a TPE with an adequate copolymer component can be selected so that the finished article is recyclable.

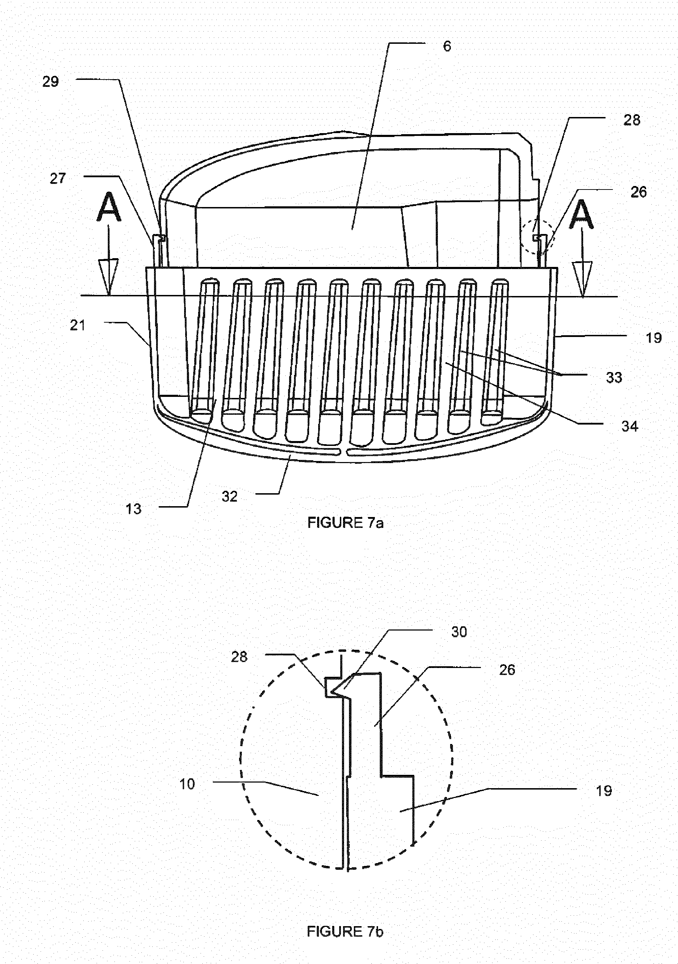

Figure 7 illustrates a further embodiment of the invention whereby the body of the battery case 13 is formed from a rigid material and is disposed on the battery 6 and maintained in position through the use of 2 cantilever type snap-fit elements 26 and 27 that protrude upwards from side walls 19 and 21, each comprising a tang 30, 31 (not shown) at the distal end of the elements 26 and 27 respectively. The tangs 30 and 31 are inwardly projecting and are arranged to engage with recesses 28 and 29 that are formed on corresponding external surfaces 9 and 10 of the battery.

To provide a releasable mechanism, the tang 30 may comprise two angled surfaces or alternatively can feature a substantially convex feature that extends into the recess 28 and 29. Alternatively the tangs 30 and 31 can be configured to prevent disassembly by using a tapered surface with a 90 degree lower surface arranged to engage permanently with the corresponding recesses 28 and 29.

It should also be appreciated that the invention is not be limited to using two cantilever snap fit elements to hold the battery case 13 in fixed position. Alternatively the numerous snapfit elements could protrude from as many surfaces necessary to provide this function, for example in Figure 7, the cantilever snapfit elements could protrude upwards from the other sidewalls 20 and 22 or from all of the upward depending surfaces of sidewalls 19, 20, 21, 22. In all of the illustrated embodiments of the invention described above, the walls of the battery case 13 (the sidewalls 19, 20, 21, 22 and the bottom curved wall 32) are provided with multiple recesses in the external surface of each wall. For the sidewalls 19, 20, 21, 22 shown in Figure 4, multiple recesses 33 are spaced apart so as to form an element 34 between each pair of the recesses and run from an area proximate to the bottom-most wall 32 to an area proximate to the opening of the cavity formed by the body of the battery case 13.

The depth of the recess should be approximately half of the full thickness of the sidewall. For the sidewalls 19, 20, 21, 22, the thickness remaining in each recess is approximately constant due to the parallel relationship between the external and internal surfaces that define the cross sectional limits of each sidewall. Where a battery case 13 body is formed from a flexible, resilient material such as silicon rubber or TPU, the recesses 33 applied in this fashion on the sidewalls 19, 20, 21, 22 increases the circumferential elasticity of the body which is advantageous for fitting the battery case to the battery 6.

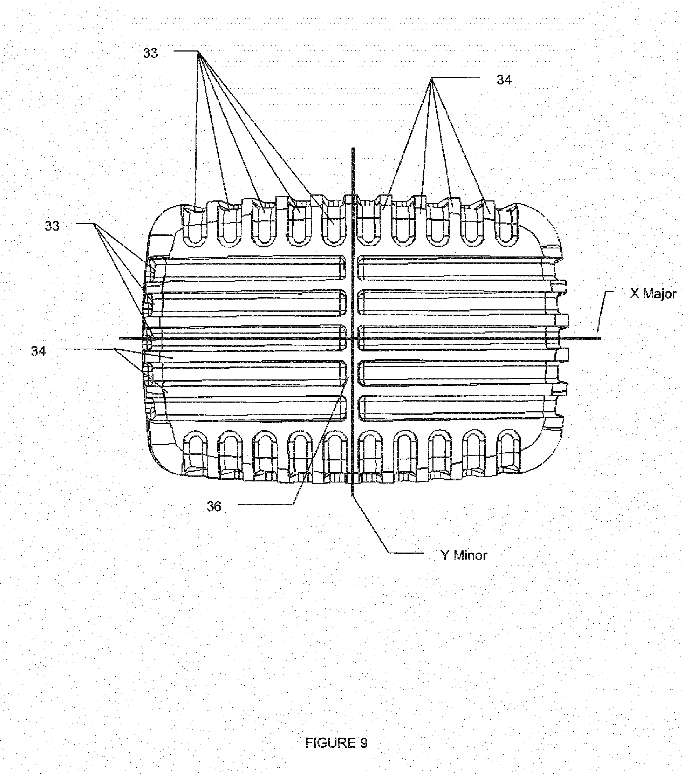

Figure 6 & 8, it is seen that the external bottom most surface 35 of the battery case 13 is substantially curved in two directions defined by two curves whose planes lies perpendicular to a major axis 'X' and a minor axis 'Y', which bisect the bottom surface as indicated in Figure 9.

In the illustrated embodiments as described above, the recesses 33 in the bottom most external surface run substantially parallel to the major axis X and are coincident with the recesses 33 of the sidewalls 19 & 21.

For the bottom-most wall 32, as shown in Figure 6, the thickness remaining in each recess is approximately constant due to the parallel relationship between the innermost extent of the recess and the internal bottom most surface 14 of the cavity.

The resulting elements defined between the recesses 33 on the bottom-most wall 32 of the battery case 13 have a greater height towards the centre of the wall. This central portion is indicated as position Z in Figure 6.

If the battery case body is formed of a flexible material, there is a risk that the elements between the recesses 33 will be insufficiently stiff to maintain sufficient flexural stability when under compression, particularly at the central portion.

This is not desirable as under the weight of the tool in use the element may deform into neighbouring elements to the extent that the bottom surface assumes a substantially deformed 'flat profile' thus potentially allowing the power tool to be set down in an upright (but potentially unstable) position.

To prevent this from occurring, the bottommost wall 32 may comprise one or more stiffening elements 36, as shown in Figure 6, which transits the recesses parallel to the minor axis Y at the point where stiffening is required.

As previously stated, the presence of the recesses is not limited to battery cases formed from flexible resilient materials. A further advantage exists in the use of recess features as their use on battery cases made from either flexible or rigid materials reduces the volume of material required to manufacture the battery case.

Although the invention has been described above with reference to one or more preferred embodiments, it will be appreciated that various changes or modifications may be made without departing from the scope of the invention as defined in the appended claims.

## Claims

1. A battery case for a power tool, comprising a body defining a cavity configured to receive a battery, the cavity including a bottom wall, complying substantially to the bottom-most surface of the battery, and at least two sidewalls that enclose the battery, and wherein the bottom surface of the battery case being formed to have a substantially curved outward profile.

2. A battery case as claimed in claim 1, wherein the body is formed of a flexible, resilient material and is arranged to be held in place by resilient deformation of the case against the battery sidewalls.

3. A battery case as claimed in claim 1 or 2, wherein the body is formed of a flexible, resilient material, and wherein at least one sidewall comprises a lip portion that is arranged to resiliently engage a surface of the battery.

4. A battery case as claimed in any preceding claim, wherein the lip portion is arranged to resiliently engage the top surface of the battery.

5. A battery case as claimed in any preceding claim that further comprises an external surface recess that is positioned in proximate to the cavity opening and arranged to receive a fastener.

6. A battery case as claimed in claims 2 to 5 wherein the flexible, resilient material, comprises silicon rubber.

7. A battery case as claimed in claim 6 wherein the silicon rubber has a Shore A harness value between 50 and 60.

8. A battery case as claimed in claims 2 to 5, wherein the flexible, resilient material, comprises Thermoplastic Polyurethane.

9. A battery case as claimed in claim 9, wherein the Thermoplastic Polyurethane has a Shore A value between 50 and 60.

10. A battery case as claimed in claim 1 wherein the body of the battery case comprises one or more snap fit elements protruding from one or more sidewalls and wherein the elements are configured to engage with complimentary recesses on the external surface of the battery.

11. A battery case as claimed in any preceding claim, wherein the body of the battery case is mechanically releasable with the body of the battery.

12. A battery case as claimed in claims 10 and 11 wherein the body of the battery case comprises being formed of a substantially rigid material.

13. A battery case as claimed in claim 12, wherein the rigid material comprises polypropylene.

14. A battery case as claimed in claim 13, wherein the rigid material comprises polycarbonate.

15. A battery case as claimed in any preceding claim, wherein the bottom-most surface comprises a plurality of recesses generally aligned with the major dimension axis of that surfaces cross section.

16. A battery case as claimed in any preceding claim wherein the bottom-most surface comprises a plurality of recesses generally aligned with the major dimension axis of that surfaces cross section and further comprises one or more supporting spines that transit the recesses perpendicularly.

17. A battery case as claimed in any preceding claim, whereby the external surfaces of the sidewalls comprise a plurality of generally aligned recesses extending from the area proximate to the bottom-most surface to an area proximate to the opening.

18. A battery case as claimed in any preceding claim, whereby the external surfaces of the sidewalls comprise a plurality of generally aligned recesses extending from an area proximate to the opening to an area where the recesses merge coincidentally with a plurality of recesses on the bottom-most surface, the recesses on the bottom-most surface being generally aligned with the major dimension of that surfaces cross section and further comprising one or more spines that transit the recesses perpendicularly.

19. A power tool battery comprising a battery case attached to it according to any preceding claim.
